# EUROPEAN PATENT APPLICATION

(11) **EP 1 574 793 A2**
(43) Date of publication of application: **14.09.2005**
(21) Application number: 04386015.4
(22) Date of filing: 20.05.2004
(51) Int. Cl.: F24J 2/34

(54) **Integrated collector-storage (ICS) solar water heater with indirect heating of the service hot water**

(30) Priority: 05.03.2004 GR 2004100085
(71) Applicant: Pnevmatikakis, Stavros, 71305 Irakleio - Creta (GR); Gertzos, Konstantinos, 26335 Patra (GR); Kaouris, Ioannis, 26500 Ag. Vasileios - Patra (GR)
(72) Inventor: Kaouris, Ioannis, P.O. 26500 Ag. Vasilios - Patras (GR)

(57) **Abstract**

Integrated Collector-Storage (ICS) solar water heater with a parallelepiped or cylindrical heat storage tank (1) with the heat exchanger (2) installed inside the tank and in direct or indirect contact to the walls of the heat storage tank and pump or circulator (3) outside the storage tank (1), or mechanical (4) inside the tank (1). The pump, or, circulator (3), or mechanical agitator (4) is set in operation whenever there is a request for hot water from the user, by triggered sensors (5), e.g. pressostatic switches, which are placed in the entrance (6) or exit (7) of the heat exchanger (2).

## Description

This invention concerns an integrated collector-storage (ICS) solar water heater for the production of service hot water for home or industrial use.

The most common solar thermal systems are the thermosyphonic type systems, which are used for the production of service hot water. These systems are divided into two broad categories: (a). The open circuit systems, in which, the fluid that circulates in the collector, is the water (under the mains pressure) of the storage tank, (b). The closed circuit systems in which the fluid of the collector is different from the water in the storage tank and the exchange of heat is carried out through a heat exchanger. The heat exchanger is either installed inside the tank (having the form of a serpentine), or, usually is constructed around the tank in the form of a thin layer of fluid (thus called "mantle") externally enclosing a great portion of the tank. The tank is installed either vertically, thus achieving superior temperature stratification, or horizontally (parallel to the collector) for a better aesthetic result.
The common integrated collector-storage (ICS) solar water heaters belong in the open circuit type solar systems, the solar energy collecting surface being a part of the heat storage tank.
These systems have reduced cost compared to the closed circuit ones, because of the integration of the collector and the heat storage tank. Moreover they are considered to be far less aesthetically intrusive.
However apart from the benefits of the integrated collector-storage (ICS) solar water heaters, there are also some drawbacks. The water storage tank must be constructed in a suitable way to have both a high corrosion resistance (since the contained water is continuously renewed) and a high-pressure strength (subjected to the mains water pressure, which can be higher than 10 atm in some areas).

This invention aims to develop an integrated collector-storage (ICS) solar water heater with indirect heating of the service water, thus relaxing the requirement for high corrosion and high pressure strength of the storage tank and furthermore, the heat transfer intensification from the storage tank to the service water.
This is achieved with the installation of a serpentine type tube heat exchanger within the storage tank. The service water passes through the tube heat exchanger while the heat transfer intensification takes place externally by forced convection. The latter is achieved by either the agitation or re-circulation of the water inside the storage tank and the positioning of the heat exchanger in contact with the surfaces of the storage tank.
By making use of a heat exchanger, the water inside the storage is no more continuously refreshed, thus eliminating the corrosion of the tank. Furthermore the tank is not connected to the mains and therefore is not subjected to high pressures. The result of the aforementioned is that the construction requirements for the heat storage tank can be relaxed, offering significant cost savings - one should note that in a conventional closed circuit solar heater more than 60% of the cost is related to the storage tank, mainly due to the high requirements for corrosion and pressure strengths.
Moreover the agitation of the storage water, by making use either of a mechanical agitator, a pump or a circulator, results in an increase of the heat convection coefficient and therefore on the intensification of the heat transfer to the service hot water. The positioning of the heat exchanger in direct contact to the surface walls of the storage tank, according to this invention, creates an extended area heat exchanger, which further improves the performance.
The invention is described below, making use of the following attached figures:
Figure No1 depicts a flat plate Integrated Collector-Storage (ICS) solar water heater in isometric view with the re-circulating system developed.
Figure No2 depicts a section A-A of the flat plate Integrated Collector-Storage (ICS) solar water heater, showing clearly the positioning of the tube heat exchanger in direct contact to the walls of the storage tank as proposed by this invention.
Figure No3 depicts an isometric view of a cylindrical Integrated Collector-Storage (ICS) solar water heater with a paddle agitator in accordance with the invention.

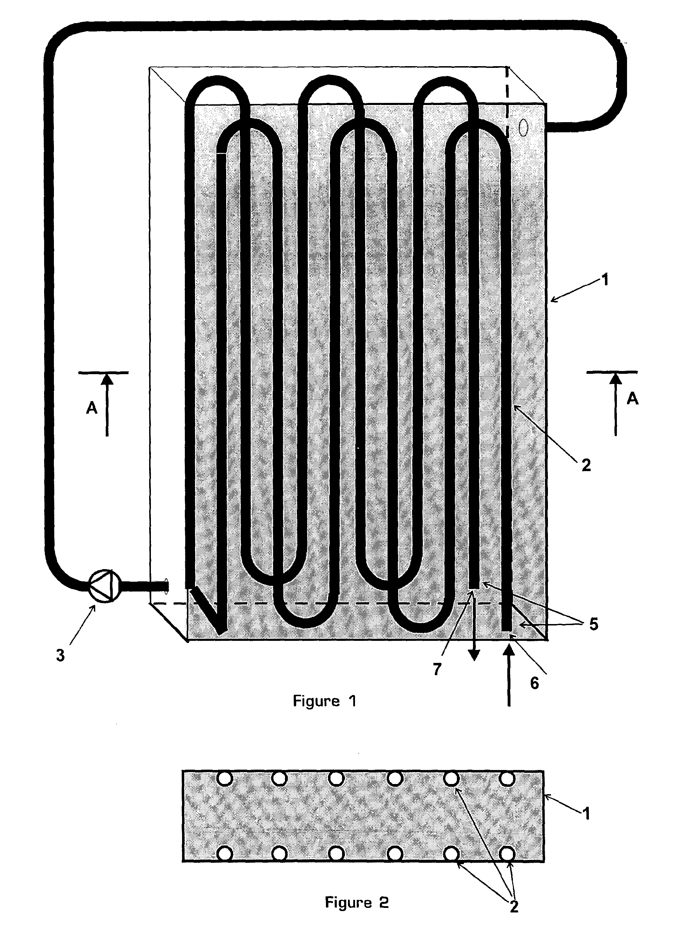

Figures 1 & 2 depict an Integrated Collector-Storage (ICS) solar water heater with a parallelepiped heat storage tank (1) and the heat exchanger (2) installed inside the tank and in contact to its walls. The pump, or circulator (3) is functioning whenever there is a request for hot water, by appropriate sensors (5), e.g. pressostatic switches, which are placed in the entrance (6) or exit (7) of the heat exchanger (2).

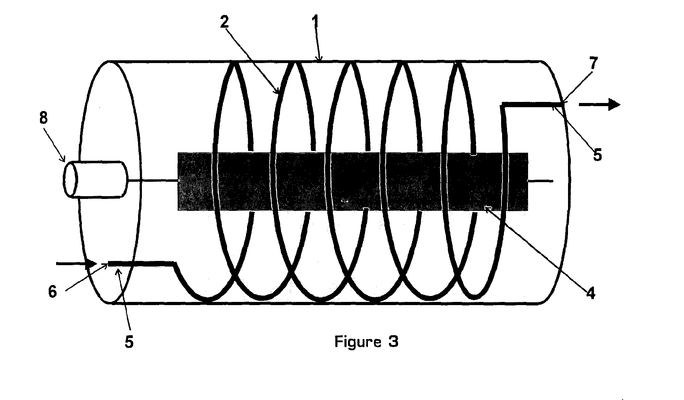

Figure No3 depicts an Integrated Collector-Storage (ICS) solar water heater with a cylindrical heat storage tank (1) and the heat exchanger (2) installed inside the tank and in contact to its wall. The paddle agitator (4) is set into rotation by a mechanical motor (8), whenever there is a request for hot water, after being triggered by sensors (5), which are placed in the entrance (6) or exit (7) of the heat exchanger (2).

## Claims

1. Integrated Collector-Storage (ICS) solar water heater (1) with indirect heating of the service hot water, which passes through a tube heat exchanger (2) placed inside the storage tank (1), **characterized by** the absence of continuous renewal of the storage tank water.

2. Integrated Collector-Storage (ICS) solar water heater (1) with indirect heating of the service hot water and with a immersed tube heat exchanger (2), in accordance with the above requirement 1, **characterized by** the fact that the storage tank is not subjected to pressure stresses, due to the mains water pressure.

3. Integrated Collector-Storage (ICS) solar water heater (1) with indirect heating of the service hot water a tube heat exchanger (2), in accordance with the above requirement 1 **characterized by** the agitation/re-circulation of the storage water by making use of a mechanical agitator (4), a pump (3), or, a circulator (3).

4. Integrated Collector-Storage (ICS) solar water heater (1) with indirect heating of the service hot water a tube heat exchanger (2), in accordance with the above requirement 1, **characterized by** the fact that the tube heat exchanger is installed in direct or indirect contact to the walls of the heat storage tank (1).
